# EUROPEAN PATENT SPECIFICATION

(11) **EP 4 449 712 B1**
(45) Date of publication and mention of the grant of the patent: **04.02.2026**
(21) Application number: 22835023.7
(22) Date of filing: 13.12.2022
(51) Int. Cl.: H04N 13/327, H04N 13/344, G02B 27/01, H04N 13/239

(54) **VALIDATION SYSTEM FOR VIRTUAL REALITY (VR) HEAD MOUNTED DISPLAY (HMD)**
VALIDIERUNGSSYSTEM FÜR HEAD MOUNTED DISPLAY (HMD) FÜR VIRTUELLE REALITÄT (VR)
SYSTÈME DE VALIDATION POUR VISIOCASQUES (HMD) DE RÉALITÉ VIRTUELLE (VR)

(30) Priority: 13.12.2021 EP 21214021
(43) Date of publication of application: 23.10.2024
(73) Proprietor: Loft Dynamics AG, 8600 Dübendorf (CH)
(72) Inventor: MARTY, Christian, 8834 Schindellegi (CH); LOCHER, Simon, 8053 Zürich (CH)
(74) Representative: Osha BWB
(86) International application number: PCT/EP2022/085573
(87) International publication number: WO 2023/110841

(56) References cited:
- US-A1- 2021 215 940
- US-B1- 10 277 893
- SEGURA ÁLVARO ET AL: "Improved virtual reality perception with calibrated stereo and variable focus for industrial use", INTERNATIONAL JOURNAL ON INTERACTIVE DESIGN AND MANUFACTURING (IJIDEM), SPRINGER PARIS, PARIS, vol. 12, no. 1, 8 February 2017 (2017-02-08), pages 95 - 103, XP036423659, ISSN: 1955-2513, [retrieved on 20170208], DOI: 10.1007/S12008-017-0377-0

## Description

### TECHNICAL FIELD

The present invention relates to a validation system for VR HMDs, i.e. for virtual reality head mounted displays.

### PRIOR ART

CN111583310A provides a virtual-real registration method and device for virtual reality and augmented reality equipment, and the method comprises the steps: calculating a projection matrix through an image photographed by a camera, and avoiding a subjective error caused by human eye setting. The sizes and distances of the test pattern and the virtual object can be adjusted according to actual conditions and the device can adapt to different models. Only two cameras and two computers are needed and are fixed, a moving device is not present during operation, and virtual-real mismatching caused by large equipment assembly difference can be effectively reduced in view of tilt and rotation.

CN111610638A provides an adjustment testing device and method for an optical module in binocular head-mounted equipment. The testing device comprises a first camera and a second camera for simulating two eyes, a camera positioning mechanism for calibrating the positions of the first camera and the second camera, a first adjusting mechanism and a second adjusting mechanism for respectively adjusting a first optical module and a second optical module, and a bracket fixing device for fixing a binocular bracket. The adjusting mechanism adjust the angle of the optical module according to the obtained rotation angle and inclination amount so as to compensate adverse effects of structural tolerance and assembling tolerance of the optical module on imaging quality.

US2021215940A1 is related to a calibration system that includes a calibration target having one or more calibration objects, a head mounted display (HMD), and a rendering engine configured to render, based on an estimated pose of the HMD, respective virtual calibration objects in a viewing area of the HMD at respective locations corresponding to the one or more calibration objects visible in the viewing area, wherein the HMD is configured to output the virtual calibration targets. The calibration system further includes an image capture system configured to capture image data comprising images of the viewing area of the HMD, and a calibration engine configured to compute, from the image data, difference data comprising respective distances between the one or more calibration objects and the respective, corresponding virtual calibration objects.

Segura Alvaro et al. have disclosed in the article "Improved virtual reality perception with calibrated stereo and variable focus for industrial use" in INTERNATIONAL JOURNAL ON INTERACTIVE DESIGN AND MANUFACTURING (IJIDEM); Springer (Paris), Paris, Vol. 12, no. 1, 8 February 2017, pages 95-103, XP036423659, ISSN: 1955-2513, DOI:10.1007/S12008-017-0377-0, a system for VR HMDs having a left eye display and a right eye display and provides a method to find the projection matrices for the two displays of an HMD for a fixed value IPD.

US 2021/215940 A1 relates to a calibration system for augmented or mixed reality HMDs with the goal of overlapping physical and virtual target object, which is a monocular problem since both sides need to match the physical target independently.

US 10 277 893 B1 discloses a profiling system to characterize optical distortion of an HMD and measures effects of inter-pupillary distances (IPD) on the device under test, whereas projection is not part of the measurements and different camera IPDs are used to assess the effect of mismatched IPD's on the distortion.

### SUMMARY OF THE INVENTION

In VR aviation training applications using HMDs (with VR for virtual reality and HMD for head mounted displays) the correct distance estimation and depth perception is essential, especially when the application is related to helicopter simulations where depth perception is essential to land the aircraft safely. There is an unacceptable risk of negative training on the simulator if depth perception and geometry are not correct.

Some HMDs have electronically sliding lenses and displays which can have play.

Additionally, the lens may have a hysteresis, which means that the true lens position depends on whether the lens is shifted from the inside to the outside or from the outside to the inside.

The user's depth perception is manipulated and/or distorted if the displays of the HMD are not in the correct position. In addition, it can cause nausea and excessive eye strain for the user if the interpupillary distance of the lenses is not correct.

Based on this prior art it is an object of the present invention to provide a device allowing to check the binocular depth representation in a VR environment. This requirement stems from the difference between surreal applications like computer games and e.g. the present VR aviation application that in computer games a relative depth perception is sufficient and the real distance perception is unimportant.

Measurement of the interpupillary distance (in short IPD) in real time and adjusting the IPD accordingly is not precise enough. Therefore, the approach used in the framework of the present application, the interpupillary distance of a user is measured in advance or already known and then the HMD is manually adjusted to this value. This value must then also be precisely correctly reflected for the reasons mentioned above, so the device according to the invention provides the measurement and verification system of this value.

The verification system is based on a measuring device connected with a control unit configured to control the measuring device and presenting an HMD to be verified with the corresponding simulated images.

The measuring device for validating the IPD of an HMD has two cameras instead of the eyes of a user, wherein the cameras are intrinsically and extrinsically calibrated. These cameras can be moved in at least one dimension, i.e. inwards / outwards (IPD). Additional dimensions can be added to measure and validate, when the users eyes are not completely aligned with the height of the horizontal centerline of the HMD, i.e. the cameras can be moved upwards / downwards. The movement forwards and backwards check the influence of the position of the eyes in the eye sockets on the validation process. The degrees of freedom are used to perform the validation with deviation to the Design Eye Point (DEP). The HMD to be validated can have an electronically shiftable displays / lenses or manually shiftable lenses with an electronic displacement meter which shows the chosen IPD in the display. Other HMDs have a number of specific, fixed IPDs as e.g. 59, 64, 69 millimeter, or the distance between the displays and lenses is chosen by a graduated slider. It is noted that HMDs may show hysteresis, i.e. the shown or communicated IPD in the case of an electronic displacement meter for a given position of the slider or of one of the fixed positions of the HMD IPD is different between the two scenarios, if the position is reached starting from a lower IPD or from a higher IPD. Therefore, preferably the measurements are taken twice, once from lowest possible HMD IPD to highest possible HMD IPD and then vice versa. The measurement can then be decided to be passed, if a supplementary condition is met, i.e. that the distance difference between the determined distance for the same HMD IPD reached from both sides (high to low and low to high) is within a given threshold or ratio.

None of the cited documents mention the use of different IPD values for the HMD. Furthermore, they do not validate the accuracy of the IPD mechanism (motor and/or sensor) to ensure that the desired IPD matches the actual IPD of the HMD. This can be explained with an example: The projection can be calibrated with the teaching of the Segura article for a fixed HMD IPD of e.g. 64mm and it passes the test as presented within Segura (or the US '893 B2 document). When the IPD of the HMD is set to a different desired value, e.g. 71mm, the actual IPD of the HMD could be 69mm. This can lead to the problems mentioned above.

The measuring device is connected to a control unit, configured to generate specific images for the two displays of the HMD creating a virtual target in a predetermined target distance. These images comprise one or more virtual target objects. The correct projection of the simulation is not the focus of the validation, but is also indirectly checked, since, if the projection is not correct, no successful measurement can be made. The correct projection is a necessary but not a sufficient condition.

The target for the IPD validation corresponds to a black area with a white dot in the center. Other targets are also possible, e.g. chessboard, black area with several white dots, etc.. The two displays of the HMD, which show the virtual target, are captured with the two cameras.

A validation system for VR HMDs as set out in claim 1, has a left eye display and a right eye display with an adjustable HMD IPD between them. A measurement device is configured in a way that an HMD to be validated is attachable to it in a way as such an HMD would be removably attached to the head of a user. The measurement device comprises a left and a right camera, wherein each camera is intrinsically and extrinsically calibrated. Each camera is mounted within the validation system for a movement of the cameras to adjust the camera IPD between the two cameras. Finally, a control unit is connected to the two cameras as well as configured to deliver control signals to the HMD, when the HMD is removably attached to the measurement device and when the HMD IPD of this VR HMD is manually or automatically adjusted to the prechosen camera IPD, wherein the control unit is configured to effect a validation measurement comprising the steps of:
a.) creating a virtual target object at a specific chosen position in a space in the field of view of the measurement device when viewing an image created based on the virtual target object through the HMD, wherein this specific chosen position has a chosen distance d_{intended} from the measurement device,
b.) calculating and transmitting the images of said virtual target object to the displays of the HMD, and representing the virtual target object on the displays of the HMD,
c.) taking the images of the displays with the left as well as the right camera,
d.) detecting the virtual target object within the images of the displays and determine the distance d_{observed} from the cameras via a triangulation,
e.) comparing the determined distance d_{observed} with the chosen distance d_{intended},
f.) making a distance validation of this chosen distance d_{intended}, when the difference or relative error between the determined distance d_{observed} and the chosen distance d_{intended} is inside a validation interval [d_{high};d_{low}] or [R_{low}; R_{high}], or denying the distance validation, if said difference or relative error is outside said interval.

Step a.) relates to the creation of the coordinates of the virtual target object vis-à-vis the user, i.e. the view of the user, wherein the user is here the unit comprising the left camera and the right camera. The coordinates have to be such that the virtual target object can be seen in the field of view of the measurement system.

These coordinate values have to be transformed by the control unit through calculation of control signals for controlling the display of the HMD to represent the image of this virtual object on this display. This comprises a transmitting part from the control unit towards the display as such.

Steps a.) and b.) are related to the images of the virtual target object. They are represented, usually as one or more dots on the displays of the HMD. Then, taking images of the displays with the left camera and the right camera is a feature related to the image of the displays.

The validation measurement with steps a.) to f.) can be conducted for a plurality of positions of a virtual target object having different predetermined virtual distances from the validation system and optionally different positions in the field of view of the HMD. Then, the IPD validation is only passed, if the distance validation of all or of a predetermined percentage of distance validations are passed. The intervals of validation can be different for different virtual distances.

The control unit can be configured to conduct steps a.) to f.) for at least two of the plurality of virtual target objects in one pass. Then, two or more virtual points are shown at the same time on the displays and the detection and calculation by the control unit are performed while such an image is displayed.

The validation measurement can comprise the distance validation of distances for a plurality of different HMD IPDs. This allows the check of an adjustable HMD which can then be validated for a number of different or range of IPDs. The distance validation is performed with a reduction of the target HMD IPD, starting from the highest possible IPD of the HMD to the lowest possible IPD of the HMD providing a IPD range validation for each IPD value of the HMD, or vice versa, wherein the device validation is only passed, if the IPD range validation of all or of a predetermined percentage of IPD interval validations are passed.

Preferably, the validation measurement further comprises the validation of distances for the same plurality of different HMD IPDs a second time, wherein the validation is performed with an increase of the target HMD IPD, starting from the lowest possible IPD of the HMD to the highest possible IPD of the HMD, or vice versa. Vice versa is here applied, if the first above mentioned device validation is performed from the lowest to highest. The hysteresis validation is only passed, if the difference or relative error between the IPD range validation value of the upward adjusted HMD IPD and the IPD range validation value of the downward adjusted HMD IPD is inside a hysteresis validation interval.

Each camera can be mounted within the validation system for a movement of the cameras to adjust the height position of the two cameras vis-à-vis the height of the horizontal centreline of the HMD when removably attached, creating height deviating from the DEP (design eye point) validation results. DEP can also be read as design eye position.

Each camera can also be mounted within the validation system for a movement of the cameras to adjust the relief distance of the two cameras from the HMD when removably attached, creating camera-eye HMD display distance deviating validation results.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1A: shows a schematical top view on a measurement device for validating the IPD of an HMD;
- Fig. 1B: shows a schematical side view on the measurement device according to Fig. 1A;
- Fig. 2A: shows a schematical top view on the measurement device according to Fig. 1A with a shifted measurement device;
- Fig. 2B: shows a schematical side view on the measurement device according to Fig. 1A with a shifted measurement device;

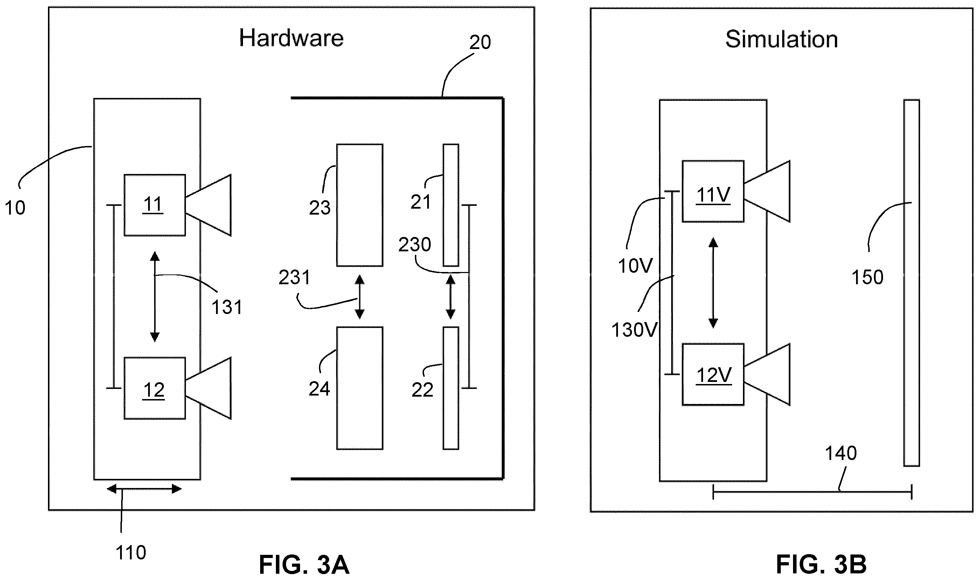

- Fig. 3: shows a schematical top view on the measurement device according to Fig. 1 as hardware on the left side together with the corresponding simulation, i.e. software situation on the right side;
- Fig. 4: shows a schematical diagram of the components of the validation device together with an HMD to be validated;
- Fig. 5: shows a flow chart of the validation method executed by the validation device;
- Fig. 6A: shows a schematical diagram of a first embodiment of the image as seen by the user or validation device as stereoscopic view as well as the separated views provided for the left and the right HMD display with schematically shown left and right cameras; and
- Fig. 6B: shows a schematical diagram of a second embodiment of the image as seen by the user or validation device as stereoscopic view as well as the separated views provided for the left and the right HMD display with schematically shown left and right cameras.

### DESCRIPTION OF PREFERRED EMBODIMENTS

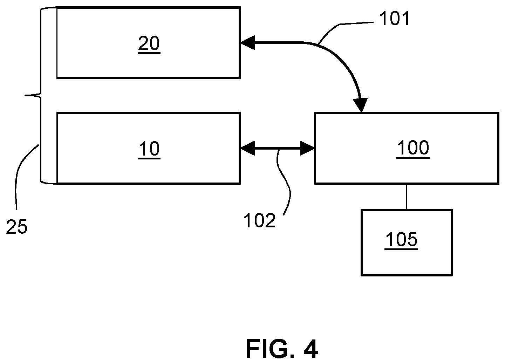

Fig. 4 shows a schematical diagram of the components of the validation device together with an HMD 20 to be validated. HMD 20 is always a virtual reality head mounted display, in short VR HMD 20. The validation device comprises a control unit 100 to be connected with a measurement device 10. The control unit 100 comprises a microprocessor or computer unit configured to access a database 105 of parameters to generate simulated images, i.e. VR images to be transmitted via communication line 101 to the HMD 20 to be validated. The HMD 20 to be validated is removably attached to the measurement device 10 through a fixation element 25 which can be a strap or head band for a human head. In other words, the measurement device 10 is configured in a way that an the VR HMD 20 to be validated is attachable with this fixation element 25 to this measurement device 10. This fixation happens in the same way as a VR HMD 20 would be removably attached to the head of a user. This comparison of the measurement device 10 with the head of the user indicate that it is preferred that the measurement device 10 has the aspect of a human head for an easy reference. However, the measurement device 10 can be a framework of profiles just allowing to fix the VR HMD to be tested to it in the same way as it would be put on the head of a human user.

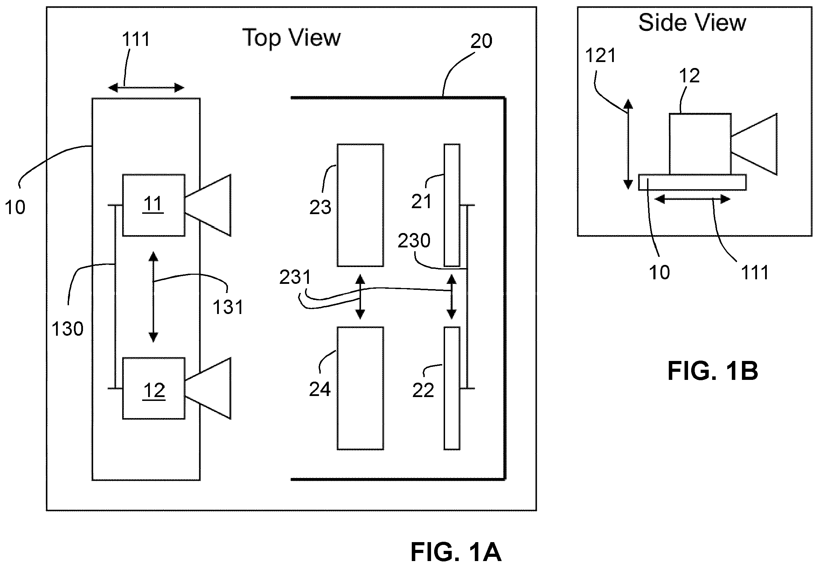

The control unit 100 is connected to the measurement device 10 with a communication line 102 to move the measurement device 10 as explained in connection with Fig. 1. The communication lines 101 and 102 can be bidirectional as will be explained in connection with the subsequent drawings. It is noted that the HMD is exclusively a VR-HMD and not an AR-HMD.

Fig. 1A shows a schematical top view on a measurement device 10 being part of a validation device for validating the IPD of an HMD 20. Fig. 1B shows a schematical side view on the measurement device 10 of Fig. 1A. Preferably the measurement device 10 is built in a frame having the form of a human head to be able to affix to this measurement device 10 the HMD 20 in the same way as it will be attached to the head of a human user as trainee using the validated HMD 20 for the intended VR aviation application.

The measurement device 10 has instead of two eyes two cameras, i.e. a left camera 11 and a right camera 12, respectively. Both cameras 11 and 12 are intrinsically and extrinsically calibrated. Such a calibration can e.g. be effected by using the approach of a Tsai calibration as published in R.Y. Tsai, "Metrology Using Off-the-Shelf TV Cameras and Lenses" in IEEE Journal of Robotics and Automation, Vol. 3, No. 4, pp. 323-344, August 1987. Other calibration models can be used as well.

The left and right cameras 11 and 12 can be moved in three dimensions: an inward/outward (IPD) movement 131 to set the camera IPD 130, a forward/backward or relief movement 111 representing the position and thus distance 110 of the eyes from the HMD 20 and an upwards / downwards or vertical movement 121 to represent the height position of the eyes vis-à-vis the height position of the optical system with the optics 23, 24 of the HMD 20. The three directions are orthogonally one to each other and span a Cartesian coordinate system. The vertical movement 121 for the height position 120 as well as the relief movement 111 for the eye socket position 110 are performed for both cameras 11 and 12 whereas the IPD movement for IPD 130 is per definition a movement of the two cameras 11 and 12 independently one from the other but preferably symmetrically to the mirror axis between the two cameras 11 and 12. It is noted that according to the invention and the main claim only one movement is needed: an inward/outward (IPD) movement 131 to set the camera IPD 130.

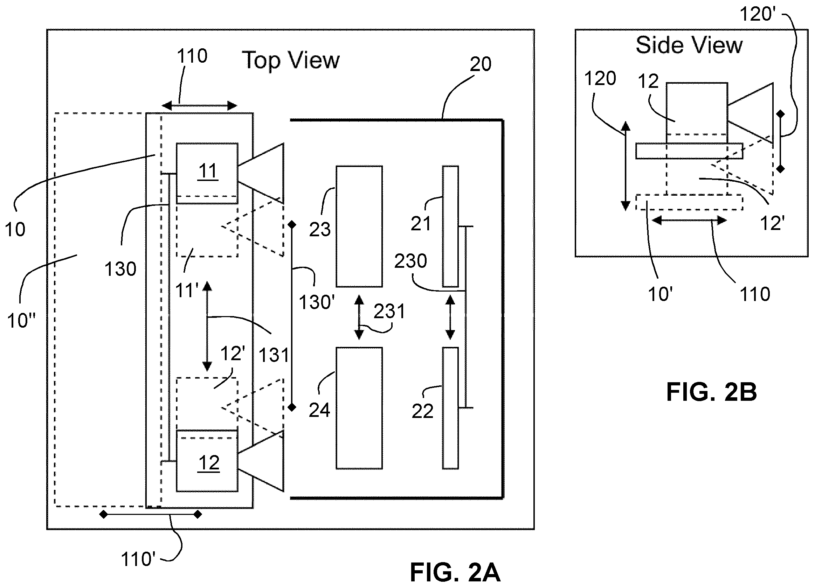

Fig. 2A and Fig. 2B show the same views as Fig. 1A and Fig. 1B with a shifted measurement device 10' and 10", respectively from its basis position shown as measurement device 10. The shifted measurement device 10" has a backward shifted device (cameras not shown). The shifted measurement device 10' has a downward shifted device as well as cameras 11 and 12 moved one towards the other, i.e. reducing the camera IPD 130 for the camera positions 11' and 12', respectively.

The total IPD movement 131 is divided in two identical portions, i.e. 50% of the movement to the right for the left camera 11 and 50% of the movement to the left right for the right camera 12. It is an advantage to have a correlated left and right movement of the camera 11 and 12, since it is then possible to give the measurement device the form of a human head with a nose, centering the HMD on the nose, when attached with a band 25 around the head, and having half of the IPD to the left and half of the IPD to the right of the vertical symmetry plane being the sagittal plane.

Reference numerals 130' for the camera IPD, 120' for the height position of the cameras as well as 110' for the eye socket position are the positions after the movement and adjustment of the measurement device. The height of the horizontal centreline of the HMD compared to the horizontal centreline of the eyes of the user is mainly predetermined by the way the HMD 20 is positioned on the head. Therefore, using the IPD validation method for different height positions of the cameras 11 and 12, e.g. a low, a centred and a high height position allows to determine the influence of this departure from the DEP (Design Eye Point).

The movement of the cameras 11 and 12 from their initial position towards the shown positions 11' and 12' allow the positioning aligned before the left eye display 21 and right eye display 22 of the HMD. In front of the left and right eye displays 21 and 22, respectively are positioned a left side optics 23 and a right side optics 24. The optics 23 and 24 are mechanically connected to the respective displays 21 and 22 for a connected sideways movement according to arrow 231 being the adjustment of the HMD IPD 230. In other words, arrow 231 represents the possibility for the user to adapt the HMDs IPD 230 to his personal IPD. The aim of the present measurement device 10 is to validate the HMD 20 for one chosen HMD IPD 230 which can then be adjusted by the user for his own experience, preferably based on a previously measured human IPD, i.e. adjusting the HMD IPD value to this known value. The validation method can be reduced to be only conducted for one single IPD. However, in view of a validation procedure for a predetermined HMD device 20, it is contemplated that such an HMD is validated for specific chosen plurality of HMD IPDs, preferably for a range of IPD values covering the entire adjustable range of the HMD, e.g. at least a minimal IPD, a middle IPD and a maximal IPD, optimally for every settable value of the HMD 20.

The degrees of freedom are used to perform the validation with deviation to the Design Eye Point (DEP) or Design Eye Reference Point (DERP), or to meet the different DEPs of different HMD models. This is reflected by the measurement IPD distance. It is also referred to as Design Eye Position.

The HMD 20 can have electronically shiftable displays 21, 22 and lenses (optics) 23, 24. The lenses (optics) 23, 24 can also be manually shiftable lenses with an electronic displacement meter. This is mainly related to current technology of VR-HMDs 20.

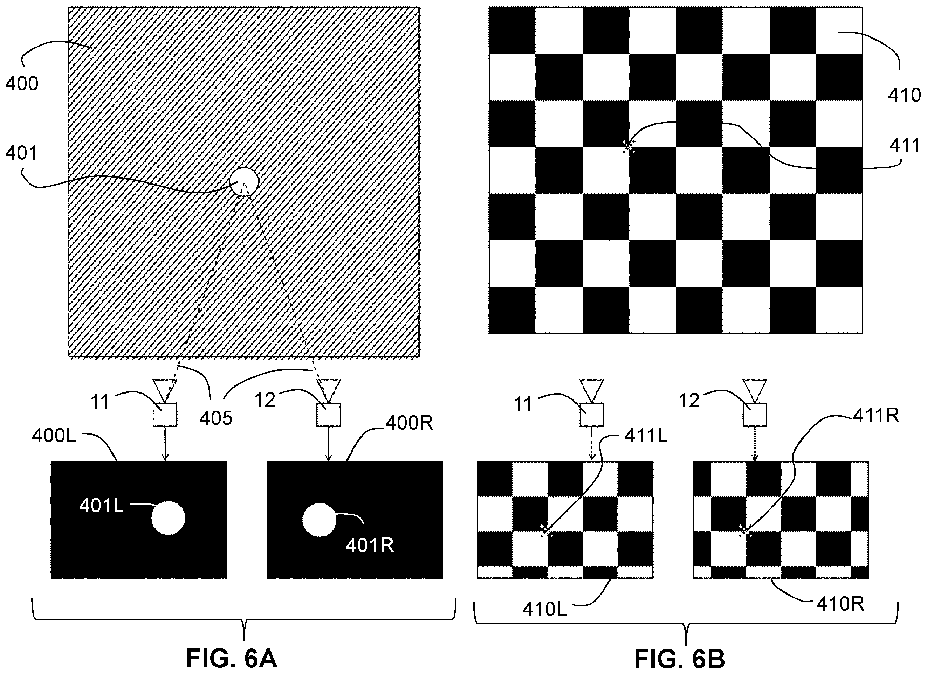

A flight simulation software can be used to generate the images 400L, 400R or 410L, 410R for the two displays 21, 22 of the HMD 20 as shown in Fig. 6A and 6B. These reference numerals are shown in connection with Fig. 6A and Fig. 6B. This approach is used to place the virtual target object 401 or 411 and generate the images 400L, 400R, 410L, 410R. The correct projection of the simulation is not the focus of the validation, but is also indirectly checked. Fig. 6A and Fig. 6B show a scheme and picture composed of several parts, i.e. a schematical diagram of an embodiment of the image as seen by the user or validation device as stereoscopic view as well as the separated views provided for the left and the right HMD display with schematically shown left and right cameras.

The (virtual object) target 401 for the IPD validation corresponds to a black area 400 with a white dot 401 in the center. Other targets are also possible, e.g. chessboard, black area with several white dots, etc. and the target 411 is e.g. a corner of four areas. The content of the two displays 21 and 22 of the HMD 20, which show the virtual target 401, are captured with the two cameras 21 and 22. The only important common feature of these representations is the clear distinction of providing a point as target having a specific distance (i.e. Z-position) as well as an X position and a Y position.

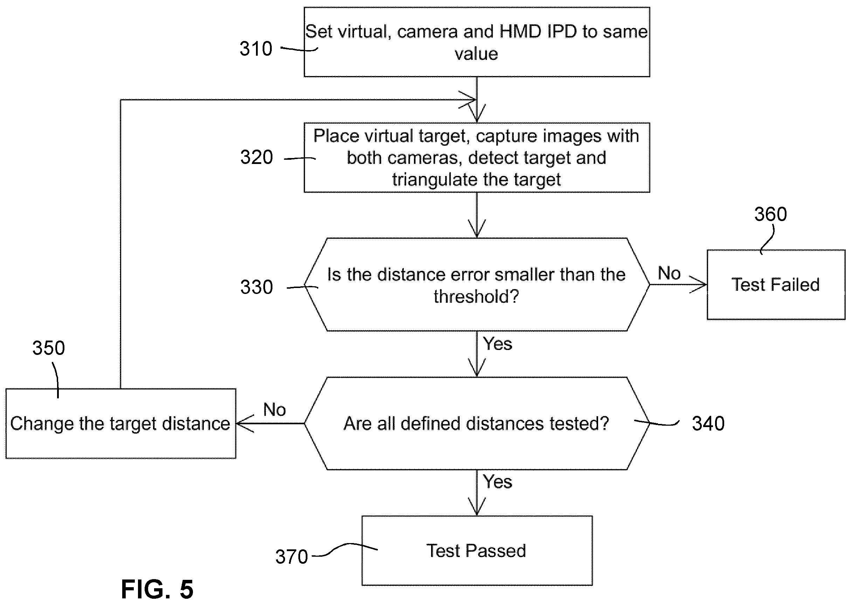

Fig. 5 shows a flow chart of the validation method executed by the control unit 100 within the validation device. In a first step, the virtual IPD 130V (simulation) and IPD 130 of the cameras 11, 12 are set to a value within the HMD limit. It is known from measurements that usually the IPD for humans are between about 50 millimeter and just below 80 millimeter. Most HMDs 20 to be validated will have HMD limits within this interval. Initially in the set parameter step 310, the HMD IPD is adjusted to this value. In the placement step 320 a virtual target object 401 or 411 in the simulation is at least provided at one position and the image is shown on HMD 20 display. This step 320 also comprises the sub step of capturing images from the two displays with the two cameras, the transfer of the images 400L and 400R or 410L and 410R via the communication to the control unit 100, detecting the target object 401L and 401R, respectively 410L and 410R, in each image as taken by the camera 11 and 12 and determine distance with triangulation which is shown with reference numeral 405, reflecting the stereoscopic approach of the two images. The distance 140 as determined in the VR simulation is compared to the intended data point. This provides in a comparison step 330 a comparison value for the distance error D between the simulated and intended object distance d_{intended} in the image and the observed image distance d_{observed}. D = d_{intended} - d_{observed}. Either there are two threshold values D_{low} < D < D_{high} or a single Dₜₕᵣₑₛ > IDI, being the boundary value for the absolute value of the difference, which in case of symmetric boundary values leads to Dₜₕᵣₑₛ = (D_{high} - D_{low}) / 2. If this result of the comparison of the value is not sufficient, e.g. higher than a predetermined threshold value, which is a first validation threshold, then the test is failed and the validation method ends here with this output 360. The comparison can be done with a relative error (or ratio) of intended object distance and observed image distance, e.g. defining the relative error R = d_{intended} / d_{observed} and as an example R_{low} < R < R_{high} with e.g. R_{low} = 0.9 and R_{high} = 1.1 defining an acceptable relative error interval or ratio interval. Of course, it is also possible to define R' = d_{observed} / d_{intended} = 1/R. The interval limits are not necessarily symmetric.

It is also possible to provide different target configurations and especially providing several targets in one image checking either several distances at the same time or the same distance at different X-Y positions, i.e. different positions in the field of view of the HMD display in order to speed up the sequence of tested images in real time.

Otherwise, usually a plurality of distances and positions are tested and a decision step 340 refers the method back via a new parameter changing step 350 to the new placement step. The parameters of the different distances to be tested are preferably initially predetermined and stored in a database. When all distance tests for the virtual target have been passed within the given threshold parameters, then the test has been successfully passed with the test result 370.

In this context it is mentioned that different threshold values can be given, i.e. predetermined and stored, for the comparison test step 330, i.e. a different absolute value for a first near distance smaller than e.g. 10 to 20 meter and a different greater threshold for a middle distance greater than 10 to 20 meter, respectively, and a further greater threshold for a greater distance greater than 50 to 100 meter. It is also possible to provide a threshold curve as e.g. a monotone increasing threshold for any specific distance to be tested. The threshold can be a percentage of the intended distance.

However, said Fig. 5 only shows the method for a specific IPD. Since an HMD 20 is intended to be used by different users having different IPDs, said method of Fig. 5 can be repeated for a number of predetermined IPDs and the test has to be passed for all IPDs tested. The number of tests is therefore the number of IPDs tested times the distances / positions tested.

### LIST OF REFERENCE SIGNS

| | | | |
|---|---|---|---|
| 10 | measurement device | 140 | target distance |
| 10' | downward and IPD shifted measurement device | 150 | virtual target |
| | | 230 | HMD IPD |
| 10" | backwards shifted measurement device | 231 | HMD IPD movement |
| | | 310 | set parameter step |
| 11 | left camera | 320 | target placement step |
| 11' | shifted left camera | 330 | comparison step |
| 11V | virtual left camera | 340 | decision step |
| 12 | right camera | 350 | parameter changing step |
| 12' | shifted right camera | 360 | test failed (one distance) |
| 12V | virtual right camera | 370 | test passed (for specific IPD) |
| 20 | HMD | 400 | virtual image |
| 21 | left eye display | 400L | virtual image for left eye display |
| 22 | right eye display | | |
| 23 | left side optics | 400R | virtual image for right eye display |
| 24 | right side optics | | |
| 25 | fixation element | 401 | virtual target object (within image) |
| 100 | control unit | | |
| 101 | communication line HMD | 401L | virtual target object for left eye display |
| 102 | communication line measurement device | | |
| | | 401R | virtual target object for right eye display |
| 105 | database | | |
| 110 | eye socket position | 405 | triangulation |
| 110' | shifted eye socket position | 410 | virtual image |
| 111 | relief movement | 410L | virtual image for left eye display |
| 120 | height position of cameras | | |
| 120' | shifted height position of cameras | 410R | virtual image for right eye display |
| 121 | vertical / height movement | 411 | virtual target object |
| 130 | camera IPD | 411L | virtual target object for left eye display |
| 130V | virtual IPD | | |
| 130' | camera IPD | 411R | virtual target object for right eye display |
| 131 | camera IPD movement | | |

## Claims

1. Validation system for virtual reality head mounted displays,VR HMDs, (20) having a left eye display (21) and a right eye display (22) with an adjustable HMD interpupillary distance, IPD, (230) between them, comprising a measurement device (10), configured in a way that the VR HMD (20) to be validated is attachable with a fixation element (25) to it (10), in the same way as the VR HMD (20) would be removably attached to the head of a user; wherein the measurement device (10) comprises a left camera (11) and a right camera (12), wherein the left camera (11) as well as the right camera (12) are intrinsically and extrinsically calibrated, wherein the left camera (11) as well as the right camera (12) are mounted within the validation system to allow for a movement of the left camera (11) and/or the right camera (12) to adjust the camera IPD (130) between the left camera (11) and the right camera (12), and a control unit (100) connected to the left camera (11) as well as the right camera (12) as well as configured to deliver control signals to the VR HMD (20) when the VR HMD (20) is removably attached to the measurement device (10) and after the HMD IPD (230) of this VR HMD (20) is manually or automatically adjusted to a prechosen camera IPD (130), wherein the control unit (100) is configured to perform a validation measurement comprising the steps of:
a.) creating a virtual target object (401, 411) at a specific chosen position in a space in the field of view of the measurement device (10), wherein this specific chosen position has a chosen distance (d_{intended}) from the measurement device (10),
b.) generating and transmitting the images of said virtual target object (401, 411) to the displays (21, 22) of the VR HMD (20), and representing the virtual target object (401, 411) on the displays (21, 22) of the VR HMD (20),
c.) taking the images (400L, 400R) of the displays (21, 22) with the left camera (11) as well as the right camera (12),
d.) detecting the virtual target object (401, 411) within the images (400L, 400R) of the displays (21, 22) and determining the distance (d_{observed}) from the left camera (11) as well as from the right camera (12) via a triangulation,
e.) comparing the determined distance (d_{observed}) with the chosen distance (d_{intended}) to determine a distance error D = d_{intended} - d_{observed} or relative error R = d_{intended} / d_{observed},
f.) passing a distance validation test for the VR HMD (20) of this chosen distance (d_{intended}), when the difference or relative error between the determined distance (d_{observed}) and the chosen distance (d_{intended}) is inside a validation interval ( [D_{high}; D_{low}] or [R_{low}; R_{high}]), or failing the distance validation test, if said difference or relative error is outside said interval.

2. Validation system according to claim 1, wherein the validation measurement with steps a.) to f.) is conducted for a plurality of positions of a virtual target object (401, 411) having different predetermined virtual distances (140) from the validation system and different positions in the field of view of the VR HMD (20) and the IPD validation is only passed, if the distance validation of all or of a predetermined percentage of distance validations are passed.

3. Validation system according to claim 2, wherein the control unit (100) is configured to conduct steps a.) to f.) for at least two of the plurality of virtual target objects (401, 411) in one pass.

4. Validation system according to any one of claims 1 to 3, wherein the validation measurement comprises the distance validation of distances for a plurality of different HMD IPDs (230), wherein the distance validation is performed with a reduction of the target HMD IPD (230), starting from the highest possible IPD of the VR HMD (20) to the lowest possible IPD of the VR HMD (20) providing a IPD range validation for each IPD value of the VR HMD (20), or vice versa, wherein the device validation is only passed, if the IPD range validation of all or of a predetermined percentage of IPD interval validations are passed.

5. Validation system according to claim 4, wherein the validation measurement further comprises the validation of distances for the same plurality of different HMD IPDs (230) a second time, wherein the validation is performed with an increase of the target HMD IPD (230), starting from the lowest possible IPD of the VR HMD (20) to the highest possible IPD of the VR HMD (20), or vice versa, and the hysteresis validation is only passed if the difference or relative error between the IPD range validation value of the upward adjusted HMD IPD and the IPD range validation value of the downward adjusted HMD IPD is inside an hysteresis validation interval.

6. Validation system according to any one of claims 1 to 5, wherein the left camera (11) as well as the right camera (12) are mounted within the validation system for a movement of the left camera (11) as well as the right camera (12) to adjust the height position (120) of the left camera (11) as well as the right camera (12) vis-à-vis the height of the horizontal centreline of the VR HMD (20) when removably attached, creating height deviating from the Design Eye Point validation results.

7. Validation system according to any one of claims 1 to 6, wherein the left camera (11) as well as the right camera (12) are mounted within the validation system to allow for a movement of the left camera (11) as well as of the right camera (12) to adjust the relief distance (110) of the left camera (11) as well as of the right camera (12) from the VR HMD (20) when removably attached, creating camera-eye HMD display distance deviating validation results.

## Patentansprüche

1. Validierungssystem für am Kopf befestigte Virtuelle-Realität-Anzeigen, VR-HMDs, (20), das eine Anzeige (21) für ein linkes Auge und eine Anzeige (22) für ein rechtes Auge mit einem einstellbaren HMD-Pupillenabstand, IPD, (230) dazwischen hat, umfassend eine Messvorrichtung (10), die derart ausgelegt ist, dass die zu validierende VR-HMD (20) mit einem Fixierelement (25) an dieser (10) in der gleichen Weise anbringbar ist, wie die VR-HMD (20) entfernbar am Kopf eines Benutzers angebracht werden würde; wobei die Messvorrichtung (10) eine linke Kamera (11) und eine rechte Kamera (12) umfasst, wobei die linke Kamera (11) sowie die rechte Kamera (12) intrinsisch und extrinsisch kalibriert sind, wobei die linke Kamera (11) sowie die rechte Kamera (12) innerhalb des Validierungssystems so befestigt sind, dass eine Bewegung der linken Kamera (11) und/oder der rechten Kamera (12) möglich ist, um den Kamera-IPD (130) zwischen der linken Kamera (11) und der rechten Kamera (12) anzupassen, und eine Steuereinheit (100), die mit der linken Kamera (11) sowie der rechten Kamera (12) verbunden sowie dazu ausgelegt ist, Steuersignale an die VR-HMD (20) zu liefern, wenn die VR-HMD (20) entfernbar an der Messvorrichtung (10) angebracht ist und nachdem der HMD-IPD (230) der VR-HMD (20) manuell oder automatisch auf einen vorab ausgewählten Kamera-IPD (130) angepasst ist, wobei die Steuereinheit (100) dazu ausgelegt ist, eine Validierungsmessung auszuführen, die die folgenden Schritte umfasst:
a.) Erzeugen eines virtuellen Zielobjekts (401, 411) an einer spezifischen ausgewählten Position in einem Raum im Sichtfeld der Messvorrichtung (10), wobei die spezifische ausgewählte Position einen ausgewählten Abstand (d_{intended}) von der Messvorrichtung (10) aufweist,
b.) Erzeugen und Übertragen der Bilder des virtuellen Zielobjekts (401, 411) an die Anzeigen (21, 22) der VR-HMD (20) und Darstellen des virtuellen Zielobjekts (401, 411) auf den Anzeigen (21, 22) der VR-HMD (20),
c.) Aufnehmen der Bilder (400L, 400R) der Anzeigen (21, 22) mit der linken Kamera (11) sowie der rechten Kamera (12),
d.) Detektieren des virtuellen Zielobjekts (401, 411) innerhalb der Bilder (400L, 400R) der Anzeigen (21, 22) und Bestimmen des Abstands (d_{observed}) von der linken Kamera (11) sowie von der rechten Kamera (12) über eine Triangulation,
e.) Vergleichen des bestimmten Abstands (d_{observed}) mit dem ausgewählten Abstand (d_{intended}), um einen Abstandsfehler D = d_{intended} - d_{observed} oder einen relativen Fehler R = d_{intended} / d_{observed} zu bestimmen,
f.) Bestehen einer Abstandsvalidierungsprüfung für die VR-HMD (20) des ausgewählten Abstands (d_{intended}), wenn die Differenz oder der relative Fehler zwischen dem bestimmten Abstand (d_{observed}) und dem ausgewählten Abstand (d_{intended}) innerhalb eines Validierungsintervalls ([D_{high};D_{low}] oder [R_{low};R_{high}]) liegt, oder Nichtbestehen der Abstandsvalidierungsprüfung, wenn die Differenz oder der relative Fehler außerhalb des Intervalls liegt.

2. Validierungssystem nach Anspruch 1, wobei die Validierungsmessung mit den Schritten a.) bis f.) für mehrere Positionen eines virtuellen Zielobjekts (401, 411) mit unterschiedlichen vorbestimmten virtuellen Abständen (140) von dem Validierungssystem und unterschiedlichen Positionen im Sichtfeld der VR-HMD (20) durchgeführt wird und die IPD-Validierung nur dann bestanden wird, wenn die Abstandsvalidierung aller oder eines vorbestimmten Prozentsatzes von Abstandsvalidierungen bestanden wird.

3. Validierungssystem nach Anspruch 2, wobei die Steuereinheit (100) dazu ausgelegt ist, die Schritte a.) bis f.) für mindestens zwei der mehreren virtuellen Zielobjekte (401, 411) in einem Durchgang durchzuführen.

4. Validierungssystem nach einem der Ansprüche 1 bis 3, wobei die Validierungsmessung die Abstandsvalidierung von Abständen für mehrere unterschiedliche HMD-IPDs (230) umfasst, wobei die Abstandsvalidierung mit einer Reduzierung des Ziel-HMD-IPD (230), beginnend vom höchstmöglichen IPD der VR-HMD (20) bis zum geringstmöglichen IPD der VR-HMD (20), wodurch eine IPD-Bereichsvalidierung für jeden IPD-Wert der VR-HMD (20) bereitgestellt wird, oder umgekehrt ausgeführt wird, wobei die Vorrichtungsvalidierung nur dann bestanden wird, wenn die IPD-Bereichsvalidierung aller oder eines vorbestimmten Prozentsatzes von IPD-Intervallvalidierungen bestanden wird.

5. Validierungssystem nach Anspruch 4, wobei die Validierungsmessung ferner die Validierung von Abständen für die gleichen mehreren unterschiedlichen HMD-IPDs (230) ein zweites Mal umfasst, wobei die Validierung mit einer Erhöhung des Ziel-HMD-IPD (230), beginnend vom geringstmöglichen IPD der VR-HMD (20) bis zum höchstmöglichen IPD der VR-HMD (20) oder umgekehrt ausgeführt wird, und wobei die Hysteresevalidierung nur dann bestanden wird, wenn die Differenz oder der relative Fehler zwischen dem IPD-Bereichsvalidierungswert des nach oben angepassten HMD-IPD und dem IPD-Bereichsvalidierungswert des nach unten angepassten HMD-IPD innerhalb eines Hysteresevalidierungsintervalls liegt.

6. Validierungssystem nach einem der Ansprüche 1 bis 5, wobei die linke Kamera (11) sowie die rechte Kamera (12) innerhalb des Validierungssystems für eine Bewegung der linken Kamera (11) sowie der rechten Kamera (12) befestigt sind, um die Höhenposition (120) der linken Kamera (11) sowie die rechte Kamera (12) gegenüber der Höhe der horizontalen Mittellinie der VR-HMD (20) im entfernbar angebrachten Zustand anzupassen, wodurch Validierungsergebnisse bezüglich einer Abweichung der Höhe vom Design-Eye-Point erzeugt werden.

7. Validierungssystem nach einem der Ansprüche 1 bis 6, wobei die linke Kamera (11) sowie die rechte Kamera (12) innerhalb des Validierungssystems so befestigt sind, dass eine Bewegung der linken Kamera (11) sowie der rechten Kamera (12) möglich ist, um den Entlastungsabstand (110) der linken Kamera (11) sowie der rechten Kamera (12) von der VR-HMD (20) im entfernbar angebrachten Zustand anzupassen, wodurch Validierungsergebnisse bezüglich einer Abweichung eines Kamera-Augen-Abstands der HMD-Anzeige erzeugt werden.

## Revendications

1. Système de validation pour casques de visualisation à réalité virtuelle, VR HMDs, (20) comportant un afficheur pour l'œil gauche (21) et un afficheur pour l'œil droit (22) avec une distance inter pupillaire (230) du HMD, IPD, ajustable entre eux, comprenant un dispositif de mesure (10), configuré de façon que le VR HMD (20) à valider puisse être fixé à l'aide d'un élément de fixation (25) au dispositif (10), de la même manière que le VR HMD (20) serait fixé de manière amovible à la tête d'un utilisateur ; dans lequel le dispositif de mesure (10) comprend une caméra gauche (11) et une caméra droite (12), la caméra gauche (11) ainsi que la caméra droite (12) étant calibrées intrinsèquement et extrinsèquement, la caméra gauche (11) ainsi que la caméra droite (12) étant montées dans le système de validation de manière à permettre un déplacement de la caméra gauche (11) et/ou de la caméra droite (12) afin d'ajuster l'IPD caméra (130) entre la caméra gauche (11) et la caméra droite (12), et une unité de commande (100) connectée à la caméra gauche (11) ainsi qu'à la caméra droite (12) et configurée pour délivrer des signaux de commande au VR HMD (20) lorsque le VR HMD (20) est fixé de manière amovible au dispositif de mesure (10) et après que l'IPD (230) du HMD de ce VR HMD (20) a été réglée manuellement ou automatiquement sur une IPD caméra (130) prédéterminée, dans lequel ladite unité de commande (100) est configurée pour effectuer une mesure de validation comprenant les étapes suivantes :
a.) créer un objet cible virtuel (401, 411) à une position spécifique choisie dans un espace du champ de vue du dispositif de mesure (10), cette position spécifique choisie ayant une distance choisie (d_{intended}) par rapport au dispositif de mesure (10),
b.) générer et transmettre les images dudit objet cible virtuel (401, 411) aux afficheurs (21, 22) du VR HMD (20), et représenter l'objet cible virtuel (401, 411) sur les afficheurs (21, 22) du VR HMD (20),
c.) acquérir les images (400L, 400R) des afficheurs (21, 22) avec la caméra gauche (11) ainsi qu'avec la caméra droite (12),
d.) détecter l'objet cible virtuel (401, 411) dans les images (400L, 400R) des afficheurs (21, 22) et déterminer la distance (d_{observed}) depuis la caméra gauche (11) ainsi que depuis la caméra droite (12) au moyen d'une triangulation,
e.) comparer la distance déterminée (d_{observed}) avec la distance choisie (d_{intended}) afin de déterminer une erreur de distance D = d_{intended} - d_{observed} ou une erreur relative R = d_{intended} / d_{observed},
f.) réussir un test de validation de distance pour le VR HMD (20) pour cette distance choisie (d_{intended}), lorsque la différence ou l'erreur relative entre la distance déterminée (d_{observed}) et la distance choisie (d_{intended}) est dans un intervalle de validation ([D_{high}; D_{low}] ou [R_{low}; R_{high}]), ou échouer le test de validation de distance si ladite différence ou erreur relative est hors dudit intervalle.

2. Système de validation selon la revendication 1, dans lequel la mesure de validation comportant les étapes a.) à f.) est effectuée pour une pluralité de positions d'un objet cible virtuel (401, 411) ayant différentes distances virtuelles prédéterminées (140) par rapport au système de validation et différentes positions dans le champ de vue du VR HMD (20), et la validation de l'IPD n'est réussie que si la validation de distance de toutes ou d'un pourcentage prédéterminé des validations de distance, est réussie.

3. Système de validation selon la revendication 2, dans lequel l'unité de commande (100) est configurée pour exécuter les étapes a.) à f.) pour au moins deux des objets cible virtuels (401, 411) de la pluralité d'objets cible virtuels en une seule passe.

4. Système de validation selon l'une quelconque des revendications 1 à 3, dans lequel la mesure de validation comprend la validation de distance de distances pour une pluralité de différentes IPD (230) du HMD, dans lequel la validation de distance est effectuée par une réduction de l'IPD cible (230) du HMD, en partant de l'IPD la plus élevée possible du VR HMD (20) jusqu'à l'IPD la plus faible possible du VR HMD (20), fournissant une validation d'une plage d'IPD pour chaque valeur d'IPD du VR HMD (20), ou inversement, la validation du dispositif n'étant réussie que si la validation de la plage d'IPD de toutes ou d'un pourcentage prédéterminé de validations d'intervalles d'IPD, est réussie.

5. Système de validation selon la revendication 4, dans lequel la mesure de validation comprend en outre la validation des distances pour la même pluralité de différentes IPDs du HMD (230) une seconde fois, la validation étant effectuée par une augmentation de l'IPD cible (230) du HMD, en partant de l'IPD la plus faible possible du VR HMD (20) jusqu'à l'IPD la plus élevée possible du VR HMD (20), ou inversement, et la validation d'hystérésis n'est réussie que si la différence ou l'erreur relative entre la valeur de la validation de la plage d'IPD de l'IPD du HMD ajustée vers le haut et la valeur de validation de la plage d'IPD de l'IPD du HMD ajustée vers le bas se situe dans un intervalle de validation d'hystérésis.

6. Système de validation selon l'une quelconque des revendications 1 à 5, dans lequel la caméra gauche (11) ainsi que la caméra droite (12) sont montées dans le système de validation de manière à permettre un déplacement de la caméra gauche (11) ainsi que de la caméra droite (12) pour ajuster la position en hauteur (120) de la caméra gauche (11) ainsi que de la caméra droite (12) par rapport à la hauteur de la ligne centrale horizontale du VR HMD (20) lorsqu'il est fixé de manière amovible, entraînant une hauteur déviant des résultats de validation du Design Eye Point.

7. Système de validation selon l'une quelconque des revendications 1 à 6, dans lequel la caméra gauche (11) ainsi que la caméra droite (12) sont montées dans le système de validation de manière à permettre un déplacement de la caméra gauche (11) ainsi que de la caméra droite (12) pour ajuster la distance de relief (110) de la caméra gauche (11) ainsi que de la caméra droite (12) par rapport au VR HMD (20) lorsqu'elles sont fixées de façon amovible, créant des résultats de validation déviants pour la distance d'affichage caméra-œil du VR HMD.
